## Europäisches Patentamt

## European Patent Office

## Office européen des brevets

(19)

(11) Veröffentlichungsnummer: **0 012 168**
**B1**

(12) **EUROPÄISCHE PATENTSCHRIFT**

(45) Veröffentlichungstag der Patentschrift:
17.11.82

(21) Anmeldenummer: **79103885.4**

(22) Anmeldetag: **10.10.79**

(51) Int. Cl.³: **B 62 D 1/04**

(54) **Lenkrad für Kraftfahrzeuge.**

(30) Priorität: **14.12.78 DE 2853977**

(43) Veröffentlichungstag der Anmeldung:
**25.06.80 Patentblatt 80/13**

(45) Bekanntmachung des Hinweises auf die Patenterteilung:
**17.11.82 Patentblatt 82/46**

(84) Benannte Vertragsstaaten:
**DE FR GB IT SE**

(56) Entgegenhaltungen:
**DE-A-1 630 307**
**DE-A-2 263 033**
**US-A-2 311 448**
**US-A-2 968 969**

(73) Patentinhaber: **Adam Opel Aktiengesellschaft, Postfach,
D-6090 Rüsselsheim (DE)**

(72) Erfinder: **Arnold, Willi, Ulmenstrasse 4, D-6085 Nauheim
(DE)**
Erfinder: **Walke, Werner, Dipl.-Ing., Platanenstrasse 34,
D-6094 Bischofsheim (DE)**
Erfinder: **Hellener, Gerhard, Dipl.-Ing.,
Anton-Günther-Strasse 4, D-6095 Ginsheim (DE)**

(74) Vertreter: **Baumgarten, Jochem, Dipl.-Ing. et al, C/O
Adam Opel Aktiengesellschaft
Bahnhofsplatz 1 Postfach 1560, D-6090 Rüsselsheim
(DE)**

## Lenkrad für Kraftfahrzeuge

Die Erfindung betrifft ein Lenkrad für Kraftfahrzeuge, mit einem über Speichen mit einer an die Lenksäule anschließenden Lenkradnabe verbundenen Lenkradkranz und einem bei Geradeausstellung des Lenkrades in der unteren Lenkradhälfte befindlichen Schwerpunkt.

Eine Fahrzeuglenkung muß so ausgelegt sein, daß beispielsweise bei Kurvenfahrt am Kurvenausgang oder bei sogenanntem »Anreißen« der Lenkung bei Geradeausfahrt die Lenkung stets selbsttätig in ihre Ausgangslage zurückläuft und die Fahrrichtungsstabilität des Fahrzeugs dabei nicht verlorengeht. Rückstellmomente an den gelenkten Vorderrädern können jedoch ein vorschnelles Zurücklaufen, somit ein »Überschwingen« der Lenkung bewirken, was zu unerwünschten Gierschwingungen und zum Pendeln des Fahrzeugs führen kann. Vornehmlich frontangetriebene Fahrzeuge mit höheren Umfangskräften der Vorderräder und somit größeren Rückstellkräften neigen unter diesen Bedingungen noch zusätzlich zu einem Aufschaukeln des Fahrzeuges, was Fehlreaktionen des Fahrers hervorrufen und eine Unfallgefahr bilden kann.

Aufgabe der Erfindung ist es daher, die Entstehung von Gierschwingungen am Fahrzeug und damit ein Pendeln zu vermeiden sowie Drehstöße und Drehschwingungen am Lenkrad so gering wie möglich zu halten.

Ausgehend von der Erkenntnis, daß zwischen der Entstehung unerwünschter Gierschwingungen und dem Massenträgheitsmoment der Lenkungsteile ein Zusammenhang besteht, wird erfindungsgemäß ein Lenkrad der eingangs erläuterten Art vorgeschlagen, das ein kleines Massenträgheitsmoment niedriger als $0,04 \, \text{kgm}^2$ besitzt, dessen Schwerpunkt mindestens 40 mm radial abwärts gerichtet vom Lenkrad-Drehpunkt entfernt in der Ebene der senkrechten Mittelhalbierenden des Lenkradkranzes liegt. Gierschwingungen und ein Pendeln des Fahrzeugs werden dadurch vermieden.

Aus der US-A-2 311 448 ist zwar ein Lenkrad bekannt, mit einem bei Geradeausstellung der gelenkten Räder in der unteren Lenkradhälfte befindlichen Schwerpunkt und mit einem Lenkradkranz, dessen Kern aus einem Rundstahl-Vollprofil mit Kunststoffummantelung besteht, welche zur besseren Ablesbarkeit der Instrumente in der Armaturentafel in der oberen Lenkradhälfte von geringerem Durchmesser und durchsichtig ist. Das massive Kernmaterial des Lenkradkranzes und der Speichen sowie die zusätzliche Anordnung eines Hupenringes bedeuten ein entsprechend hohes Gewicht und führen zu einem unerwünscht großen Massenträgheitsmoment. Einen Hinweis auf die erfindungsgemäße Problematik gibt diese Patentschrift nicht.

In vorteilhafter Ausbildung der Erfindung kann das Lenkrad mit — bezogen auf die Lenkradstellung in Geradeausstellung der gelenkten Räder — in der unteren Lenkradkranzhälfte am Lenkradkranz angeordneten Zusatzmassen versehen sein, wobei als Zusatzmasse entweder ein in seinem Querschnitt asymmetrisch geformter Lenkradkranz vorgesehen sein kann, dessen Querschnitt ausgehend von einem auf der senkrechten Lenkradkranzhalbierenden liegenden oberen Punkt zu einem unteren Punkt beiderseits spiegelbildlich zunimmt, oder aber das Lenkrad eine etwa ein Viertel des unteren Lenkradkranzes bedeckende Ummantelung aus einem Material hoher Wichte, insbesondere Eisen, aufweisen kann.

Weitere vorteilhafte Alternativausbildungen des Lenkrades sind in Unteransprüchen und Ausführungsbeispielen erläutert. Durch die erfindungsgemäße Massenverteilung bzw. Anordnung von Zusatzmassen in der unteren Lenkradkranzhälfte werden ferner ein jederzeit exakter Rücklauf der Lenkung sowie eine Verringerung von Drehstößen und Drehschwingungen am Lenkrad erreicht.

Nach einer weiteren zweckmäßigen Ausgestaltung der Erfindung können Lenkradspeichen den unteren, mit einer Zusatzmasse versehenen Winkelabschnitt des Lenkradkranzes begrenzen, wobei diese für sich allein oder zusammen mit dem von ihnen eingeschlossenen Winkelabschnitt des Lenkradkranzes aus Hohlprofilen gestaltet und mit einer Zusatzmasse hoher Wichte, insbesondere Blei, ausgefüllt sein können. Hierdurch lassen sich formgestalterische und stabilitätserhöhende Faktoren in sinnvoller Weise koordinieren.

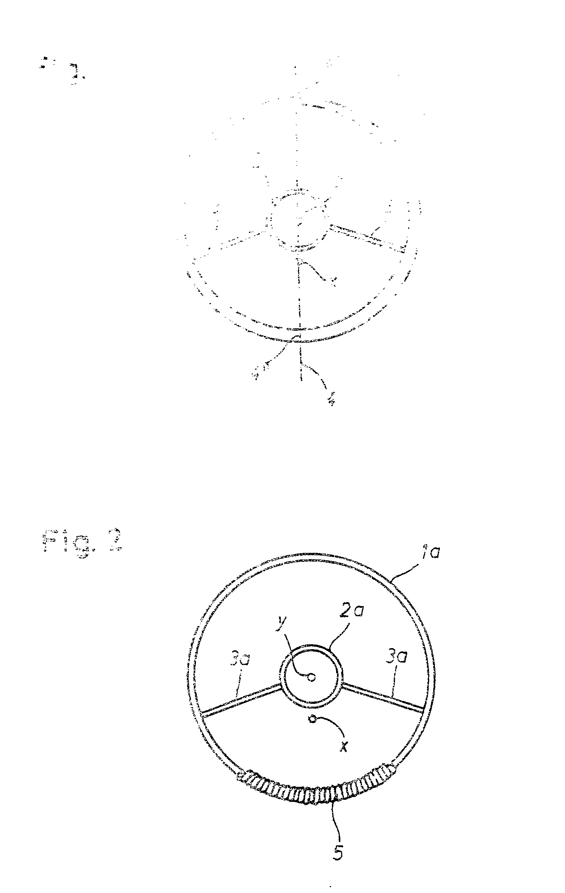

Weitere Einzelheiten und Vorteile sind anhand von Ausführungsbeispielen in den Zeichnungen dargestellt und anschließend erläutert; die Fig. 1 bis 5 zeigen verschiedene Lenkräder in Draufsicht.

In Fig. 1 ist ein Lenkrad mit asymmetrisch aus Vollmaterial gefertigtem Lenkradkranz 1 dargestellt, mit der Nabe 2 und die Nabe mit dem Kranz verbindenden Speichen 3. Die Wandung des Lenkradkranzes 1 nimmt dabei ausgehend von einem oberen Punkt 4' der senkrechten Mittelhalbierenden 4 des Lenkrades spiegelbildlich bis hin zum unteren auf dieser liegenden Punkt 4" in ihrem Durchmesser gleichmäßig zu, so daß eine Schwerpunktverlagerung in die untere Lenkradkranzhälfte zu verzeichnen ist. Der bei allen Ausführungsbeispielen (Fig. 1 bis 5) auf der Winkelhalbierenden 4 liegende Schwerpunkt X liegt etwa 40 mm unterhalb des Mittelpunktes y des Lenkradkranzes. Das Massenträgheitsmoment des Lenkrades beträgt $0,035 \, \text{kgm}^2$.

Das in Fig. 2 gezeigte Lenkrad besteht aus einem in üblicher Weise aus Voll- oder Rohrprofil gefertigten Lenkradkranz a, der Nabe 2ɼ unɯ den Speichen 3a. Zur Erzielung einer Schwerpunktverlagerung des Lenkrades im Sinne der Erfindung ist etwa ein Viertel des unteren Lenkradkranzes mit einer Drahtwicklung 5 (Zusatzmasse) versehen. Der Lenkradkranz kann mit einer gepolsterten Ummantelung (nicht dargestellt) versehen sein:

Fig. 3 zeigt ein Lenkrad, bei dem etwa die obere Hälfte des Lenkradkranzes 1b aus einem rohr- oder schalenförmigen Hohlprofil 1b' und daran anschließend die untere Hälfte aus Vollmaterial 1b'' gefertigt ist.

In Fig. 4 besteht das Lenkrad aus einem rohrförmigen Lenkradkranz 1c, der in einem unteren etwa durch den Winkel Z definierten Bogenbereich 1c' mit Blei als Zusatzmasse gefüllt ist.

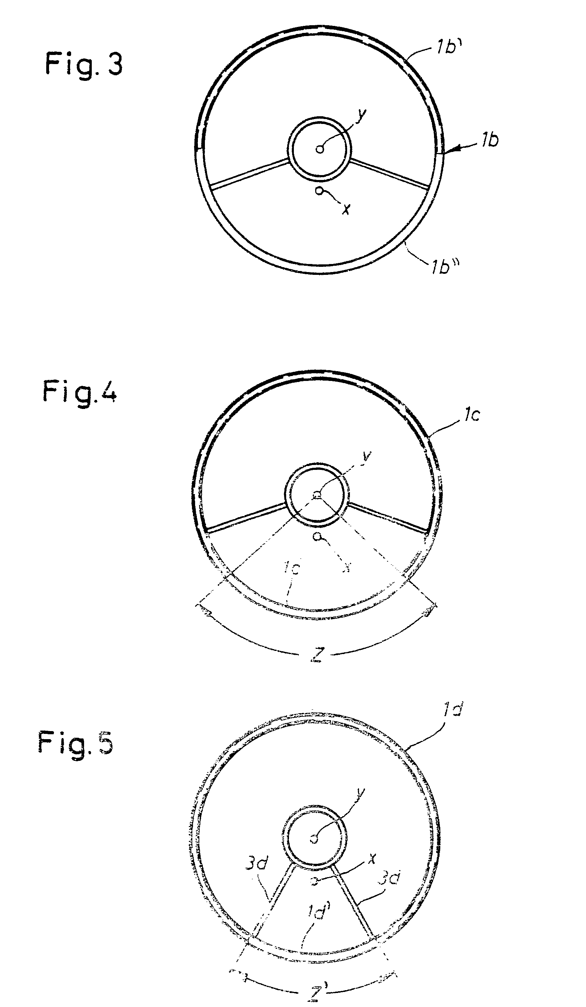

Das Lenkrad nach Fig. 5 besitzt einen rohrförmigen Lenkradkranz 1d sowie Nabe und Kranz verbindende Rohrspeichen 3d. Die Rohrspeichen 3d und der von ihnen im Winkel Z umschlossene Kranzbogen 1d' sind mit Blei als Zusatzmasse gefüllt.

Weitere Variationen dieser Beispiele sind möglich, wenn nur beachtet wird, daß neben einem geringen Massenträgheitsmoment des Lenkrades ein genügend weit unterhalb der Lenkraddrehachse liegender Lenkradschwerpunkt erreicht ist. Dadurch werden die erste Eigenfrequenz des die beiden Vorderräder und das Lenkrad umfassenden Lenkungs-Schwingungssystems, die durch Schwingungen des Lenkrades in Phase mit den beiden Vorderrädern erzeugt wird und im Bereich der u. a. von den Reifeneigenschaften beeinflußten Giereigenfrequenz des Fahrzeugs liegt, und diese Giereigenfrequenz voneinander getrennt, wodurch die Pendelneigung des Fahrzeugs verringert wird. Auch eine zusätzliche Herabsetzung der Lenkübersetzung kann diesen Vorteil noch erhöhen, ebenso eine möglichst steile Anordnung des Lenkrades (Lenkradebene vertikal).

**Patentansprüche**

1. Lenkrad für Kraftfahrzeuge mit einem über Speichen (3, 3a, 3d) mit einer an die Lenksäule anschließenden Lenkradnabe (2) verbundenen Lenkradkranz (1) und einem bei Geradeausstellung des Lenkrades in der unteren Lenkradhälfte befindlichen Schwerpunkt (X), dadurch gekennzeichnet, daß das Lenkrad ein kleines Massenträgheitsmoment niedriger als 0,04 kgm² besitzt und daß sich der Schwerpunkt (X) des Lenkrades mindestens 40 mm radial abwärts gerichtet vom Lenkrad-Drehpunkt (y) entfernt in der Ebene der senkrechten Mittelhalbierenden (4) des Lenkradkranzes (1) befindet.

2. Lenkrad nach Anspruch 1, mit einer in der — bezogen auf die Lenkradstellung in Geradeausstellung der gelenkten Räder — unteren Lenkradkranzhälfte am Lenkradkranz angeordneten Zusatzmasse.

3. Lenkrad nach den Ansprüchen 1 und 2, dadurch gekennzeichnet, daß als Zusatzmasse ein in seinem Querschnitt asymmetrisch geformter Lenkradkranz vorgesehen ist, dessen Querschnitt ausgehend von einem auf der senkrechten Lenkradkranzhalbierenden (4) liegenden oberen Punkt (4') zu einem unteren Punkt (4'') beiderseits spiegelbildlich zunimmt.

4. Lenkrad nach den Ansprüchen 1 und 2, dadurch gekennzeichnet, daß als Zusatzmasse eine etwa ein Viertel des unteren Lenkradkranzes bedeckende Ummantelung (5) aus einem Material hoher Wichte, insbesondere Eisen, besteht.

5. Lenkrad nach Anspruch 4, gekennzeichnet durch eine Drahtwicklung (5) als Ummantelung.

6. Lenkrad nach den Ansprüchen 1 und 2, dadurch gekennzeichnet, daß etwa die obere Lenkradkranzhälfte (1b') aus Rohr besteht, an welches die untere Lenkradhälfte (1b'') aus im Querschnitt vollem Material gleicher oder höherer Wichte anschließt.

7. Lenkrad nach den Ansprüchen 1 und 2, mit einem aus Rohr bestehenden Lenkradkranz, dadurch gekennzeichnet, daß die untere Lenkradkranzhälfte (1c') in einem spiegelbildlich beiderseits der senkrechten Lenkradkranzhalbierenden (4) sich erstreckenden Winkelbereich (Z) von etwa 90° eine Rohrfüllung aus einem relativ schweren Material, insbesondere Blei, besitzt.

8. Lenkrad nach einem der Ansprüche 4 bis 7, dadurch gekennzeichnet, daß Lenkradspeichen den unteren, mit einer Zusatzmasse versehenen Winkelabschnitt des Lenkradkranzes begrenzen.

9. Lenkrad nach Anspruch 8, dadurch gekennzeichnet, daß die Lenkradspeichen (3d) für sich allein oder zusammen mit dem von ihnen eingeschlossenen Winkelabschnitt (Z) des Lenkradkranzes (1d) aus Hohlprofilen gestaltet und mit einer Zusatzmasse hoher Wichte, insbesondere Blei, ausgefüllt sind.

**Claims**

1. Steering wheel for motor vehicles having a steering wheel rim (1) connected through spokes (3, 3a, 3d) to a steering wheel hub (2) adjoining the steering column and having a centre of gravity (x) being situated in the lower half of the steering wheel when the steering wheel is in the straight-ahead position, characterised in that the steering wheel has a small mass moment of inertia lower than 0,04 kgm² and that the centre of gravity (x) of the steering wheel is at a distance of at least 40 mm from the steering wheel pivotal point (y) in a radially downward direction, in the plane of the vertical central bisector (4) of the steering rim (1).

2. Steering wheel in accordance with claim 1, having an additional mass arranged on the steering wheel rim in the lower half-rim region — i.e. lower with reference to the steering wheel position when the guided wheels are in the straight-ahead position.

3. Steering wheel in accordance with claims 1 and 2, characterised in that the additional mass is provided as a steering wheel rim asymetrically shaped in its cross-section which, proceeding from an upper point (4') lying on the vertical bisector (4) of the steering wheel rim, then increases towards a lower point (4'') at both sides in mirror-image fashion.

4. Steering wheel in accordance with claims 1 and 2, characterised in that the additional mass takes the form of a sheathing (5) which covers approximately a quarter of the lower steering wheel rim and consists of a material of high specific gravity, particularly iron.

5. Steering wheel in accordance with claim 4, characterised by a wire winding (5) as a sheathing.

6. Steering wheel in accordance with claims 1 and 2, characterised in that substantially the upper half-rim of the steering wheel (1b') consists of tubing which is adjoined by the lower half-rim (1b'') of a material of solid cross-section of identical or higher specific gravity.

7. Steering wheel in accordance with claims 1 and 2, having a steering wheel rim consisting of tubing, characterised in that the lower half-rim (1c') of the steering wheel is provided with a tube filling of a relatively heavy material, especially lead, within an angular range (Z) of about 90° extending at both sides of the vertical bisector (4) of the steering wheel rim, in mirror-image fashion.

8. Steering wheel in accordance with one of the claims 4 to 7, characterised in that steering wheel spokes bound the lower angular section of the steering wheel rim provided with an additional mass.

9. Steering wheel in accordance with claim 8, characterised in that, of themselves alone or in conjunction with the angular section (Z) of the steering wheel rim enclosed by them, the steering wheel spokes are shaped from hollow profiles and are filled with an additional mass of high specific gravity, particularly lead.

**Revendications**

1. Volant de direction de véhicule à moteur, avec une couronne de volant (11) reliée par des rayons (3, 3a, 3b) à un moyeu de volant (2) monté sur la colonne de direction et dont le centre de gravité (x) se trouve dans la moitié inférieure du volant quand ce dernier se trouve en position de conduite en ligne droite, volant caractérisé en ce qu'il a un moment d'inertie de masse réduit inférieur à 0,04 kg/m² et que le centre de gravité (x) du volant est éloigné d'au moins 40 mm vers le bas du centre de rotation y du volant, dans le plan de la bissectrice (4) verticale de la couronne du volant.

2. Volant selon la revendication 1, caractérisé en ce qu'il comporte une masse complémentaire disposée sur la couronne du volant, dans sa moitié inférieure, considérée dans la position du volant pour la position en ligne droite des roues directrices.

3. Volant selon la revendication 1 ou 2, caractérisé en ce que pour la masse complémentaire, une couronne de volant formée de façon dissymétrique dans sa section transversale est prévue, dont la section augmente symétriquement des deux côtés à partir d'un point supérieur (4') situé sur la bissectrice verticale (4) du volant, jusqu'à un point inférieur (4'').

4. Volant selon la revendication 1 ou 2, caractérisé en ce que, comme masse complémentaire, il comporte une gaine (5) en une matière de poids élevé, particulièrement d'acier, entourant environ un quart inférieur de la couronne du volant.

5. Volant selon la revendication 4, caractérisé en ce qu'il comporte un enroulement de fil (5) constituant la gaine.

6. Volant selon la revendication 1 ou 2, caractérisé en ce qu'environ la moitié supérieure (1b') de la couronne de volant consiste en un tube auquel est reliée la moitié inférieure (1b'') du volant en une matière de section transversale pleine, de même poids ou de poids plus élevé.

7. Volant selon la revendication 1 ou 2 comprenant une couronne de volant constituée par un tube, volant caractérisé en ce que la moitié inférieure (1c') de la couronne du volant comporte une région angulaire (Z) d'environ 90° s'étendant symétriquement des deux côtés de la bissectrice verticale (4) de la couronne du volant avec un remplissage tubulaire d'une matière relativement lourde, particulièrement de plomb.

8. Volant selon l'une quelconque des revendications 4 à 7, caractérisé en ce que des rayons du volant délimitent un secteur angulaire inférieur de la couronne de volant, prévu avec une masse complémentaire.

9. Volant selon la revendication 8, caractérisé en ce que les rayons (3d) du volant, seuls ou avec le secteur angulaire (Z) de la couronne du volant (1d) qu'ils encadrent sont réalisés en un profilé creux et sont remplis avec une masse complémentaire de poids élevé, particulièrement en plomb.

Fig. 2

Fig. 3

Fig. 4

Fig. 5